# EUROPEAN PATENT APPLICATION

(11) **EP 3 476 237 A1**
(43) Date of publication of application: **01.05.2019**
(21) Application number: 18202707.8
(22) Date of filing: 25.10.2018
(51) Int. Cl.: A43B 13/16, A43B 13/18, B29D 35/00, B29D 35/12

(54) **METHOD AND APPARATUS FOR MANUFACTURING FOOTWEAR SOLES**

(30) Priority: 31.10.2017 US 201715798514
(71) Applicant: Saucony, Inc., Waltham, MA 02451 (US)
(72) Inventor: PAULSON, Andrea A., Arlington, MA 02474 (US); JESSIMAN, Alexander W., Newton, MA 02465 (US); MAHONEY, Christopher J., Concord, MA 01742 (US); WHITE, J. Spencer, North Easton, MA 02356 (US)
(74) Representative: Haseltine Lake LLP

(57) **Abstract**

A sole component molded with different portions molded from different bead foams where there is a gradual transition between the different bead foams, as well as a method and apparatus for manufacturing the same. The molding system includes a mold cavity that is partially divided into at least two adjacent mold regions by at least one blade. The blade does not fully separate adjacent regions, but instead defines a space allowing beads introduced into adjacent regions to intermingle or overlap at the interface between the mold regions. The size, shape and configuration of the blade and the space may vary from application to application. The molding system may include a blade retractor that allows the blade to be retracted after the beads are loaded and before the beads are joined. The different bead foams may be different expanded thermoplastic polyurethane bead foams that vary in density or hardness or color.

## Description

### BACKGROUND OF THE INVENTION

The present invention relates to footwear and more specifically to methods and apparatus for manufacturing footwear sole components using expanded foam beads.

Bead foams have long been available and used for lightweight structures, such as Styrofoam cooler and bike helmets. Expanded polystyrene beads and expanded polypropylene beads were some of the first bead foams to common use, but other bead foams, such as expanded thermoplastic polyurethane ("eTPU"), have also been in use for years. There has been a recent growth in the use of expanded foam beads in the manufacture of footwear soles. For example, bead foams are now used to form midsoles in many running and casual athletic shoes.

Generally, bead foams are manufactured in a two-step process. First, the beads are formed from expanded plastic. The size, shape and configuration of the beads may vary, but it is not uncommon for the beads to be formed as a plurality of oval beads of roughly uniform size and shape. Second, the foam beads are joined to together in the desired shape to form the finished product. The foam beads can be joined together using a variety of alternative methods and apparatus. For example, steam chest molding is one conventional way to join the foam beads. In steam chest molding, the foam beads are poured or otherwise deposited into a mold and then steam is introduced to soften the beads and sometimes create a secondary expansion and allow them to join along their outside surfaces. Often the steam chest molding systems will apply a partial vacuum in the mold cavity to draw the beads together.

It is known to produce sole components with different types of foamed beads. For example, it may be desirable to make the heel portion of the midsole from one bead type and the forefoot portion from another. One conventional system for achieving this construction is to position a divider in the mold cavity that divides the mold cavity in two separated mold regions. The two different types of foam beads are then separately introduced into the two mold regions. For example, the mold parts may have separate inlet passages that allow the different types of foam beads to be introduced into the separate mold regions. Once the foam beads have been loaded into the mold cavity, the divider may remain while the foam beads are joined, thereby providing a sole component with two separate parts, or the divider may be removed thereby providing a sole component in which the two parts are integrally joined. Although this conventional approach allows manufacture of bead foam sole components from different types of foam beads, it has some disadvantages. When the divider is held in place during joining of foam beads, the sole component is manufactured in two separate parts that can be used separately or subsequently joined. The use of separate parts provides a number of potential disadvantages, including the need to provide supplemental support to retain the separate parts and, as well as different support and cushioning profiles than would result from a sole component manufactured from a continuous material. When the divider is removed before joining the foam beads, it is possible for the foam beads to unite along the interface surface. While this may result in a one-piece sole component, the sole component will have an abrupt change from one foam bead type to the other, which may negatively impact performance or make the sole less comfortable to the wearer.

### SUMMARY OF THE INVENTION

The present invention provides a molding system for molding bead foam sole components from different bead types. The molding system includes a mold cavity that is partially divided into at least two adjacent mold regions by at least one blade. The blade does not fully separate adjacent regions, but instead defines open areas that allow beads introduced into adjacent regions to intermingle or overlap at the interface between the mold regions. For example, the blade may extend only partially across the mold cavity leaving a gap of sufficient size to allow the desired level of intermingling or overlapping of foam beads from the two regions. The size, shape and configuration of the blade may vary from application to application.

In one embodiment, the molding system is configured to manufacture midsoles or other footwear sole components. In the context of manufacturing midsoles, the molding system may include a top mold part and a bottom mold part that cooperatively define a mold cavity in the shape of the midsole. In this embodiment, the blade extends downwardly into the mold cavity from the top mold part (though it could extend into the mold in essentially any direction or orientation). The blade extends toward the bottom mold part terminating short of the bottom surface of the bottom mold part such that a gap is defined between the end of the blade and bottom surface. In use, the blade generally divides an upper portion of the mold cavity into first and second regions while leaving a gap that maintains communication between the first and second regions toward the bottom of the midsole. This gap allows beads to flow between the first and second regions.

In one embodiment, the molding system includes a single blade that separates the mold cavity into a forefoot region and a heel region. The system may alternatively include a plurality of blades that divide the mold cavity into three or more regions. For example, two blades may be used to separate the mold cavity into a forefoot region, an arch region and a heel region. The bead foam introduced into each region may be different in terms of physical or chemical properties. For example, the differences may be merely aesthetic (e.g. color) or they may be strictly functional from a physical or chemical standpoint (e.g. density or resiliency) or a combination of aesthetic and functional properties. As another example, the molding system may include two blades that are generally aligned to cooperatively create general separation between two mold cavity regions. For example, an upper blade may extend downwardly into the mold cavity and a lower blade may extend upwardly into the mold cavity in alignment with the upper blade. The two blades may be spaced apart to create a gap toward the center of the midsole, thereby providing a central portion where the foam beads can intermingle or overlap.

In one embodiment, the molding system is configured so that the blade remains stationary in the mold cavity while the foam beads are joined together, for example, through the introduction of steam and the application of a partial vacuum within the mold cavity.

In one embodiment, the molding system is configured so that the blade is retractable. In embodiments with a retractable blade, the blade may be moved fully or partially out of the mold cavity after the beads have been loaded into the mold. This will allow the foam beads from two adjacent regions to join even along the interface that was once occupied by the blade. In one embodiment, the blade may be mounted to a linear actuator or other structure capable of moving the blade. The linear actuator may be mounted to the top mold part and have a movable rod that extends toward the mold cavity and is affixed to the blade.

In one embodiment, the blade may be manufactured from a material that becomes an integral part of the midsole. For example, the blade may be manufactured from a material that is in the same chemical family as the foam beads so that it will bond with and join to the foam beads as the foam beads are processed into the finished sole component. In this embodiment, the blade may be affixed to one or more mold parts that hold the blade while the cavity is loaded with foam beads and while the foam beads are joined into an integral mass. In some applications, the blade may have a sacrificial margin that is fitted into a channel in a mold part and is trimmed away after the midsole is formed. This embodiment is exemplary and the blade may be incorporated into the mold using essentially any insert molding techniques and apparatus. The blade may be configured to provide the sole component with additional aesthetic or functional characteristics. For example, the blade may have a more complex shape with a bottom flange that extends generally longitudinally to provide the midsole with an embedded shank-like structure or a top flange that extends generally longitudinally to form an exposed shank-like structure or an exposed heel cup on the top of the midsole.

The present invention provides a molding system capable of providing controlled intermingling or overlapping of different bead foams in a sole component. Sole components manufactured in accordance with the present invention have the potential to provide improved performance and aesthetic characteristics. The intermingled or overlapping foam beads may provide a gradual transition between regions containing different bead foams and may provide improved bonding between the regions. The present invention allows the location and degree of intermingling or overlapping to be controlled simply and effectively by varying the size, shape, configuration and/or location of the blade(s). In application in which the blade is removed before the beads are joined, the system allows even the foam beads adjacent to the blade to become integrally joined. In applications in which the blade remains in the mold during joining of the foam beads, the finished sole component may have a gap where the blade was located. The gap may be left open, for example, to enhance flexibility or it may be closed by cement, adhesive or resin.

These and other objects, advantages, and features of the invention will be more fully understood and appreciated by reference to the description of the current embodiment and the drawings.

Before the embodiments of the invention are explained in detail, it is to be understood that the invention is not limited to the details of operation or to the details of construction and the arrangement of the components set forth in the following description or illustrated in the drawings. The invention may be implemented in various other embodiments and of being practiced or being carried out in alternative ways not expressly disclosed herein. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof. Further, enumeration may be used in the description of various embodiments. Unless otherwise expressly stated, the use of enumeration should not be construed as limiting the invention to any specific order or number of components. Nor should the use of enumeration be construed as excluding from the scope of the invention any additional steps or components that might be combined with or into the enumerated steps or components. Any reference to claim elements as "at least one of X, Y and Z" is meant to include any one of X, Y or Z individually, and any combination of X, Y and Z, for example, X, Y, Z; X, Y; X, Z ; and Y, Z.

### BRIEF DESCRIPTION OF THE DRAWINGS

Fig. 1 is a perspective view of a midsole formed using a molding system in accordance with one embodiment of the present invention.
Fig. 2 is a sectional view of a molding system in accordance with an embodiment of the present invention showing the mold cavity filled with foam beads.
Fig. 3 is a sectional of the molding system showing the mold cavity partially filled with foam beads.
Fig. 4 is a sectional of the molding system showing the mold cavity filled and the blade partially retracted.
Fig. 5 is a sectional of the molding system showing the mold cavity partially filled with foam beads and the blade extended.
Fig. 6 is a sectional of the molding system showing the mold cavity filled and the blade retracted.
Fig. 7 is a sectional view of the molding system showing a first blade.
Fig. 8 is a sectional view of the molding system showing a first alternative blade.
Fig. 9 is a sectional view of the molding system showing a second alternative blade.
Fig. 10 is a sectional view of the molding system showing a third alternative blade.
Fig. 11 is a sectional view of the molding system showing a fourth alternative blade.
Fig. 12 is a sectional view of the molding system showing a fifth alternative blade.
Fig. 13 is a sectional view of the molding system showing a sixth alternative blade.
Fig. 14 is a sectional view of the molding system showing a seventh alternative blade.
Fig. 15 is a sectional view of the molding system showing an eighth alternative blade.
Fig. 16 is a sectional view of the molding system showing a ninth alternative blade.
Fig. 17 is a sectional view of an alternative molding system showing an alternative arrangement with side-by-side blades.
Fig. 18 is a sectional view of another alternative molding system with two blades at different positions along the length of the sole component.
Fig. 19 is a perspective view of an alternative midsole manufactured using a molding system with two blades, such as shown in Fig. 18.
Fig. 20 is a sectional view of a molding system showing an overlapping configuration of different foam bead types.
Fig. 21 is a perspective view of an alternative midsole manufactured with a blade extending at a first alternative angle.
Fig. 22 is a perspective view of an alternative midsole manufactured with a blade extending at a second alternative angle.
Fig. 23 is a sectional view of a molding system showing a blade extending at the second alternative angle.
Fig. 24 is a sectional view of an alternative molding system for a blade/shank.
Fig. 25 is a sectional view of an alternative molding system for an outsole/blade.

### DESCRIPTION OF THE CURRENT EMBODIMEN

### Overview.

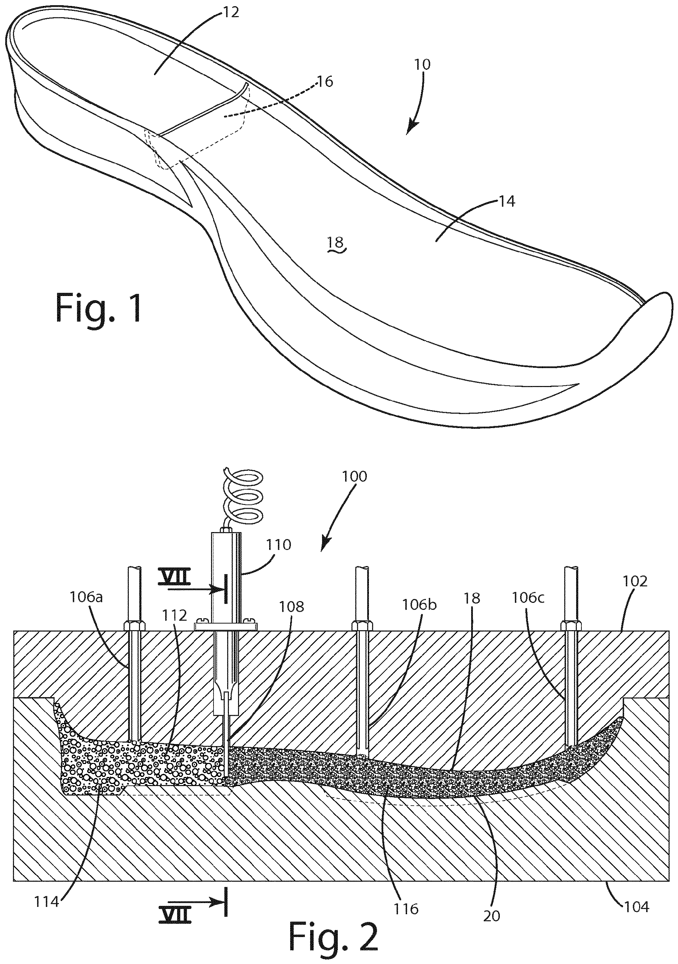

A sole component 10 manufactured from bead foam in accordance with an embodiment of the present invention in shown in Fig. 1. The sole component 10 is manufactured with a heel portion 12 and a forefoot portion 14 formed from two different foam bead types. The foam beads may vary in essentially any way, such as variations in size, shape, color, resiliency, durability or other functional or aesthetic characteristics. The sole component 10 defines a gap 16 extending downwardly from the top surface 18 toward the bottom surface 20. The gap 16 extends partially (and not entirely) through the thickness of the sole component 10. The gap 16 provides a region of defined separation between the heel portion 12 and the forefoot portion 14. The portion of the sole component 10 below the gap 16 includes an intermingling or overlapping of the foam beads from the heel portion 12 and the forefoot portion 14. In alternative embodiments, the number, location, arrangement and configuration of regions of different bead types may vary from application to application.

The sole component 10 may be manufactured using a variety of alternative molding systems. Fig. 2 is an illustration of one embodiment of a molding system 100 capable of manufacturing the sole component 10 from different bead foams. The molding system 100 includes a top mold part 102, a bottom mold part 104, injection ports 106a-c, a blade 108 and a blade actuator 110. During operation, the blade 108 is positioned in the mold cavity 112 to provide partial separation between the heel region 114 and the forefoot region 116 of the mold cavity 112. Because the separation is only partial, the different types of foam beads will be able to intermingle or overlap during the process of loading foam beads into the mold cavity. The location and degree of intermingling or overlapping can be controlled by adjusting the size, shape and configuration of the blade 108, as well as the position of the blade 108 within the mold cavity 112. The blade 108 may be removed (or partially removed) after loading of the mold cavity 112 or it may remain in place during the process of joining the foam beads. As a result, the present invention provides a bead foam sole component that is manufactured with different portions formed from different bead types where the interface between the different bead types may include a well-defined separation through part of the sole component and a marked degree of intermingling or overlapping through another part of the sole component. The intermingling or overlapping may provide a soft and gradual transition between the different bead types and may also help to improve the bond between the adjacent sole portions.

For purposes of this application, the terms "heel region," "arch region" and "forefoot region" are used to refer to those portions of the sole component that lie generally below the heel, arch and forefoot, respectively, of a typical wearer's foot. Further, directional terms, such as "vertical," "horizontal," "top," "bottom," "upper," "lower," "inner," "inwardly," "outer" and "outwardly," are used to assist in describing the invention based on the orientation of the embodiments shown in the illustrations. The use of directional terms should not be interpreted to limit the invention to any specific orientation(s).

### Sole Component.

In one aspect, the present invention provides a sole component for an article of footwear that is manufactured from bead foam and includes different portions formed from different types of foam beads. The bead foam may be essentially bead foam that can be formed into a finished product by forming individual foam beads, loading the individual foam beads into the mold and then joining the foam beads inside the mold. The beads may be partially or fully expanded during manufacturing of the individual foam beads and/or during the process of joining the beads together in the mold. In one embodiment, the foam beads are expanded thermoplastic polyurethane ("eTPU") foam. Specific examples of suitable foams include "180SD" eTPU foam, which is commercially available from Guo Sheng of Chidian Town, Jinjiang City, Fujian Province, China; and "Infinergy™" foam, which is commercially available from BASF Corporation of Florham Park, NJ. Further, suitable bead foams are described in US Publication 2010/0222442 to Prissok et al, which published September 2, 2010; US Publication 2013/0227861 to Prissok et al, which published September 5, 2013; US Publication 2015/0174808 to Rudolph et al, which published June 25, 2015; US Publication 2016/0121524 to Daschlein et al, which published May 5, 2016, all of which are incorporated herein by reference in their entirety.

The different portions of the sole component are joined by regions in which the different types of bead foam are intermingled or overlapped to provide a gradual transition from one bead foam to the other. For example, the ratio of the area of one foam bead type to the area of the other foam bead type along a transverse plane (e.g. from medial side to lateral side of the sole component) extending along the direction of compression (e.g. in a direction from the top surface to the bottom surface of the sole component) may gradually transition over a substantial distance. In the context of a midsole or other sole component, the transition distance may be in the range of 5mm to 100mm and in some applications may be about 25mm. However, the transition range may in other application vary from 5mm to 150mm. The change in the ratio between the different types of foam beads across the transition distance may be generally linear, but the rate in variation may differ from application to application. Fig. 1 shows a midsole having a heel portion 12 that is formed from a first bead foam and a forefoot portion that is formed from a second bead foam. In this embodiment, the first and second bead foams differ from one another in compression characteristics. For example, the heel portion 12 may be manufactured from foam beads that are harder than the foam beads of the forefoot portion 14. More specifically, the density of the beads in the heel portion 12 may be about 180 grams per liter and the density of the beads in the forefoot portion 14 may be about 160 grams/liter. These densities are merely exemplary and the densities of the heel portion 12 and the forefoot portion14 may have essentially any values. In some applications, it may be desirable to provide the finished sole component with a substantially uniform density from toe to heel, including throughout the length and width of the heel and forefoot regions. Given that common production procedures can have different impact on finished density in different regions of the sole component, it may be helpful in achieving generally uniform density to use beads of different densities in the heel and forefoot regions. In other applications, the general goal may be to provide the finished heel and forefoot regions with different densities. For example, it may be desirable in some applications to provide the sole component 10 with a firmer heel portion 12 and a softer forefoot portion 14. Although the first and second bead foams vary in compression characteristics, such as density or hardness, the bead foam may vary in different ways. For example, the bead foams may vary in size, shape, color, resiliency, durability or other functional or aesthetic characteristics. In the illustrated embodiment, there is a gap 16 in the upper surface of the midsole 10 that provides a defined separation between the heel portion 12 and the forefoot portion 14. In this embodiment, the gap 16 represents the space occupied by the blade 108 (discussed below) during the process of joining the foam beads. The gap 16 may be left open during use or may be closed, for example, by cement or other adhesives. In alternative embodiments in which the blade 108 is retracted after loading and before joining the foam beads, the gap 16 will not be present though there will still be a relatively defined line of separation between the joined foam beads along the interface. In these alternative embodiments, retraction of the blade 108 allows the foam beads loaded into the mold cavity 112 on opposite sides of the blade 108 to flow up against each other with little or no intermingling of the different types of foam beads.

In this embodiment, the gap 16 is inset from the sides and bottom of the midsole 10. To achieve this result, the blade 108 is configured to define a space between the blade 108 and the internal side surfaces of the top mold part 102 and the internal side surfaces and internal bottom surface of the bottom mold part 104. This space allows an amount of intermingling between the different types of foam beads from adjacent regions of the mold cavity 112. The amount of intermingling may be controlled by varying the size, shape and configuration of the spacing, as well as the size, shape and configuration of the foam beads.

The midsole 10 of Fig. 1 is merely exemplary. The present invention may be incorporated into essentially any footwear sole component in which it is desirable to form different portions of the sole from different foam bead types, including without limitation outsoles, insoles and footbeds. The use of only partial separation between adjacent regions during manufacture allows the midsole 10 to be manufactured is an single continuous structure in which the foam beads are joined even through a portion of the midsole at the boundary between adjacent regions. In the illustrated embodiment, the joined portion is positioned towards the bottom of the midsole 10, but it may be positioned elsewhere, for example, at or toward the top of the midsole 10 or the middle of the midsole 10. For example, the blade 108 may enter the mold cavity 112 from essentially any direction and may extend at essentially any angle to essentially any depth.

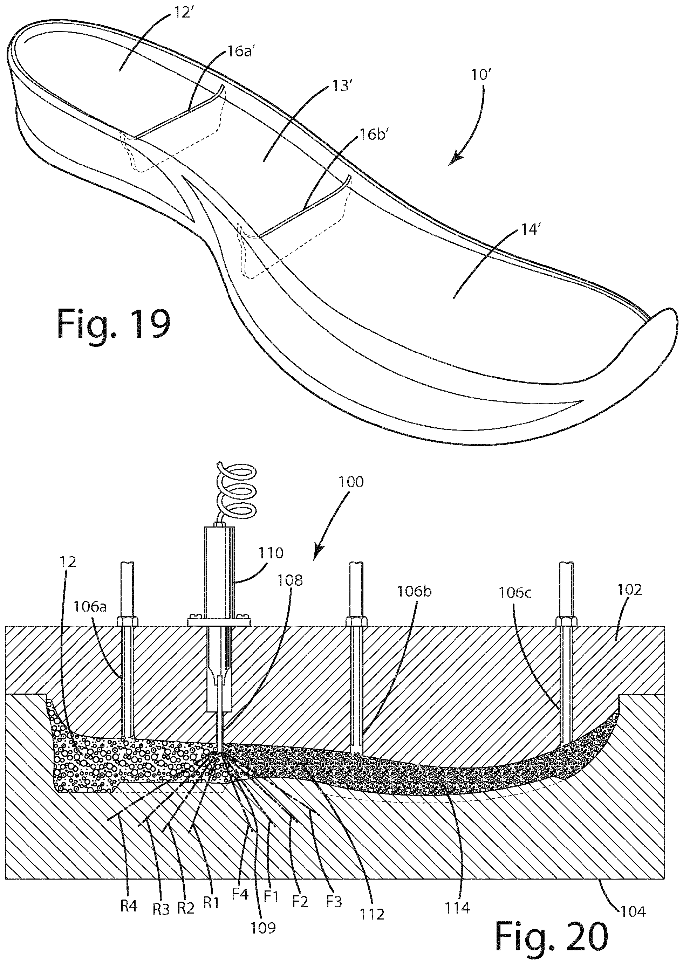

Although shown in Fig. 1 with two different midsole portions 12 and 14, the number of different portions may vary from application to application. For example, Fig. 19 shows an alternative midsole 10' having three different portions, namely heel portion 12', arch portion 13' and forefoot portion 14. In this embodiment, the midsole 10' may include a first gap 16a' separating the heel portion 12' from the arch portion 14' and a second gap 16b' separating the arch portion 14' from the forefoot portion 14'. With this embodiment, different bead types may be used to form different heel, arch and forefoot portions. As with midsole 10, the gaps 16a-b' in the midsole 10' extend only partially through the thickness of the midsole 10' with the remainder of the thickness of the midsole 10' including intermingling of bead foams from adjacent regions.

### Molding System.

As noted above, the manufacturing method of the present invention may be implemented using a molding system having a mold cavity that is divided into a plurality of different regions by one or more blades (or other types of dividers) that extend only partially across the mold cavity, and where each region has a separate inlet for introducing foam beads into that region. Fig. 2 is an illustration of a molding system 100 capable of manufacturing sole component 10 from different bead foams. In this embodiment, the sole component 10 includes a heel portion 12 and a forefoot portion 14 that are formed form different bead types. In this embodiment, the molding system 100 includes a top mold part 102, a bottom mold part 104, injection ports 106a-c, a blade 108 and a blade actuator 110. The top mold part 102 and bottom mold part 104 cooperate to define a mold cavity 112 in the desired shape of the sole component 10. The number and arrangement of mold parts may, however, vary from application to application. It should further be noted that the terms "top" and "bottom" are used here with reference to the normal orientation of the sole component being molded by the molding system 100 and not the orientation of the molding system 100 or its mold parts 102 and 104. The terms "top" and "bottom" are not intended to limit the orientation of the molding system 100, the top mold part 102 or the bottom mold part 104. Instead, the molding system 100 may be arranged in essentially any orientation, including a sideways orientation in which the top mold part 102 and bottom mold part 104 are oriented on their sides and are configured to close horizontally rather than upright and configured to close vertically as shown in Fig. 2.

During operation, the blade 108 is positioned in the mold cavity 112 to provide partial separation between the mold cavity regions. The term "partial separation" is intended to refer broadly to arrangements in which there is at least one opening between adjacent regions of sufficient size to allow foam beads from one region to flow into the adjacent region as the foam beads are introduced into the mold cavity 112. Because the separation is only partial, the different types of foam beads will be able to intermingle or overlap during the process of loading foam beads into the mold cavity. The location and degree of intermingling or overlapping can be controlled by adjusting the size, shape and configuration of the blade 108, as well as the position of the blade 108 within the mold cavity 112. The blade 108 may be removed (or partially removed) after loading of the mold cavity 112 or it may remain in place during the process of joining the foam beads. In some applications, the intermingling can be controlled by way in which the foam beads are introduced into the mold cavity 112. For example, it may be desirable to assist the foam beads from one region to flow into the adjacent region. In such applications, the foam beads may be loaded into one region more quickly (e.g. sooner, at a faster rate or at a higher pressure) so that those beads reach the opening first and therefore dominate the flow into the adjacent region. The timing, rate and/or pressure of foam bead introduction can be varied from application to application.

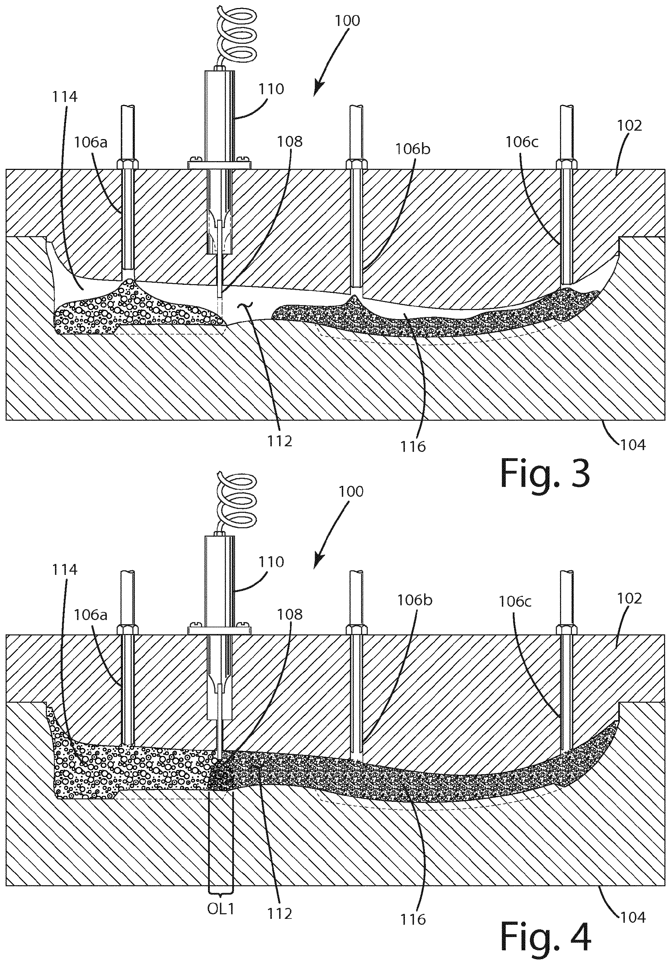

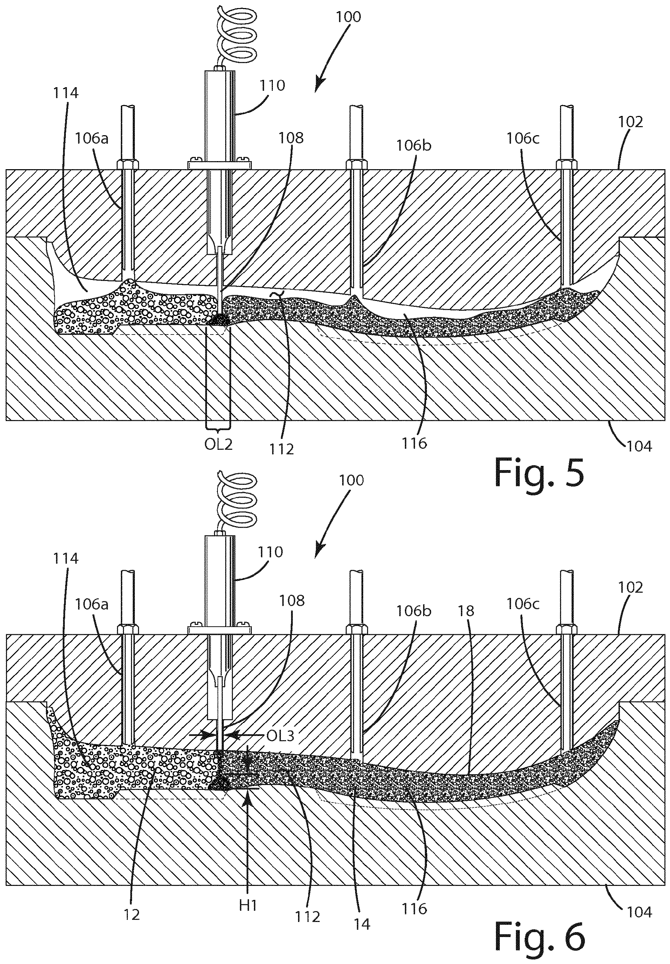

The blade actuator 110 may be coupled to the blade 108 and may be extendable and retractable so that the position of the blade 108 within the mold cavity 112 may be varied through operation of the blade actuator 110. In use, the blade actuator 110 may be operated to provide the blade 108 with movement at different stages of the molding process. In some applications, the blade actuator 110 may be used to position the blade 108 and retain it in that position throughout the loading and joining steps in the molding process. Fig. 2 shows the blade positioned in the mold cavity 112 following loading and joining of the foam beads. The depth of the blade during the loading and/or joining may vary from application to application. For example, Fig. 3 shows the blade 108 in a partially retracted position in solid lines and a fully extended position in broken lines. During use, the blade actuator 110 may be extended or retracted to position the blade 108 to provide the molded sole component with the desired configuration. For example, Fig. 4 shows the blade 108 positioned at a higher location than in Fig. 2 for both the loading and joining steps. In this embodiment, the molded sole component will have a shallower gap 16 and a greater region of intermingling (represented by width OL1 in Fig. 4). In other applications, the blade actuator 110 may vary the position of the blade 108 during the manufacturing process. For example, the blade actuator 110 may extend the blade 108 for the loading step and fully or partially retract the blade 108 for the joining step. To illustrate, Fig. 5 shows the blade 108 in a lowered position where it will remain for the loading step. This allows the foam beads to intermingle or overlap during the loading step through the space between the bottom of the blade 108 and the internal bottom surface of the bottom mold part 104 (as represented by width OL2 of Fig. 5). After loading, the blade 108 may be fully retracted as shown in Fig. 6. Retraction of the blade 108 prior to the joining step will allow the loose foam beads that were separated from one another on opposite sides of the lowered blade 108 to shift into contact with one another with limited intermingling. As a result, the once-separated foam beads from adjacent regions will be able to join to one another during the foam bead joining process. Given the limited intermingling that results from raising the lowered blade 108 after the loading step, there will be a relatively abrupt change between foam beads throughout the interface region that was once occupied by lowered blade. The limited amount of intermingling is represented in Fig. 6 by width OL3. There will, however, continue to be significantly more intermingling through the space that was open during loading. The width of this region of greater intermingling is shown in Fig. 5 by width OL2 and the height of this region of greater intermingling is shown in Fig. 6 by height HI.

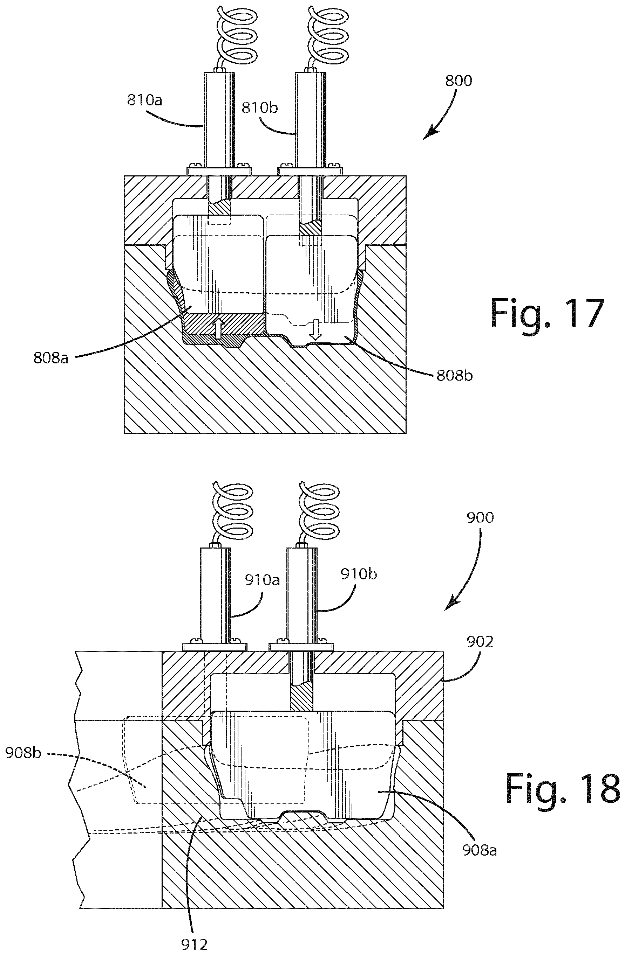

The blade actuator 110 may be essentially any mechanism capable of provide the blade 108 with the desired motion. For example, the blade actuator 110 may be a pneumatically operated linear actuator (as shown in Fig. 2) or it may be an electrically operated linear actuator. In the illustrated embodiment, the blade actuator 110 is mounted to the top mold part 102. It may alternatively be mounted to other mold parts or to other support structure on or adjacent to the molding system 100. In the illustrated embodiment, the molding system 100 includes a single blade 108 and a single blade actuator 110. In alternative embodiments, the molding system may include a plurality of blades and a plurality of blade actuators. For example, Fig. 17 shows a molding system 800 with a pair of side-by-side blades 808a-b that are operatively supported by side-by-side blade actuators 810a-b. Each blade 808a-b may be used to provide a gradual transition between the foam beads introduced on opposite sides of the blades 808a-b. As another example, Fig. 18 shows a molding system 900 with a pair of blades 908a-b that are separated from one another along the length of the mold cavity 912 to divide the mold cavity 912 into three separate regions-each of which may include different types of bead foams. The molding system 900 may be used to manufacture midsole 10' shown in Fig. 19, which includes a heel portion 12', an arch portion 13' and a forefoot portion 14'. These portions may be joined by gradual transition regions and may be partially separate by gaps 16a' and 16b', which may be closed, for example, by adhesive. In this embodiment, the blades 908a-b are operatively supported by blade actuators 910a-b, which are mounted to the top mold part 902 at different locations along the length of the mold part 902. As discussed above, either or both of the blades 908a-b may be retracted (partially or fully) after loading and before joining so that different foam beads are joined along even along regions separated by the blades during loading.

In alternative embodiments, the blade (or other divider) may be immovably mounted within the molding system 100. For example, the blade may be rigidly affixed to a mold part. In applications of this nature, the blade will installed in the desired position and will remain in place throughout the molding process. In some applications, the molding system may include a combination of fixed blades and movable blades, as desired.

In the embodiment of Fig. 2, the foam beads are introduced into the mold cavity 112 through injection ports 106a-c, but they may be introduced using essentially any inlet(s) that allow foam beads to be poured into the mold cavity 112 or introduced under pressure. The number of inlets may vary from application to application, but there will typically be at least one separate inlet for each region so that foam beads may be separately introduced into each region. Referring again to Fig. 2, the top mold 12 may include one injection port 106a in communication with the heel region two injection ports 106b-c in communication with the forefoot region. The use of two injection ports 106b-c may help to improve beads distribution within the forefoot region of the mold cavity 112. However, the number and arrangement of injection ports may vary from application to application and from region to region. For example, the two injections ports 106b-c may be replaced by a single injection port, if desired. Although the injection ports 106a-c are shown integrated into the top mold part 102, they may in alternative embodiments be integrated into other mold parts, such as the bottom mold part 104 or any other mold part that may exist in that embodiment. The size, location and angle of entry of the injection ports 106a-c may be selected to assist in controlling the flow of beads into the mold cavity and through the space joining adjacent mold cavity regions.

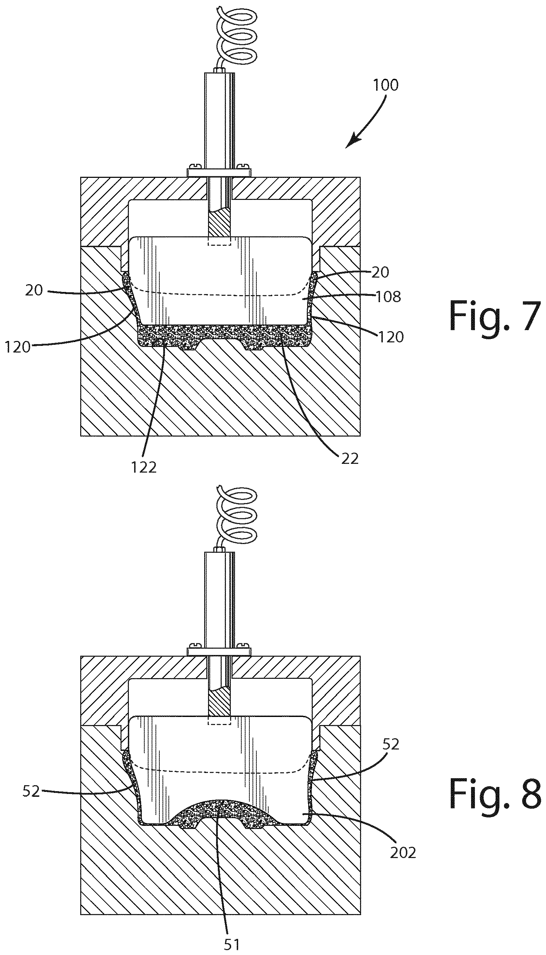

The design and configuration of the blade may be varied from application to application to assist in controlling the shape of the molded product. For example, the size, shape, location and configuration of the blade may be varied to control the regions of separate and regions of intermingling or overlapping between adjacent mold cavity regions. For example, Fig. 7 shows a first blade 108 in position during the loading step. As shown, there is a relatively narrow space 20 between the blade 108 and the internal side surfaces 120 of the mold cavity 112 and a somewhat wider space 22 between the blade 108 and the internal bottom surface 122 of the mold cavity 112. As a result, foam beads will flow through and join to one another through these spaces 20 and 22 to form the midsole 10 of Fig. 1. As can be seen in Fig. 1, the blade 108 leaves a gap 16 that is visible from the top surface of the midsole 10, but bead foam appears from the side and bottom of the midsole to extend continuous from the heel portion 12 to the forefoot portion 14.

An alternative blade 202 is shown in the loading position in Fig. 8. In this embodiment, there a significant space S1 between the bottom center portion of the blade 202 and a relatively narrower space S2 elsewhere around the blade 202. In this embodiment, intermingling or overlapping between the different bead foams will occur primarily toward the bottom center of the sole component 204. The blade 202 may remain in this position during the step of joining the foam beads, or the blade 202 may be partially or fully retracted after loading and before joining of the foam beads.

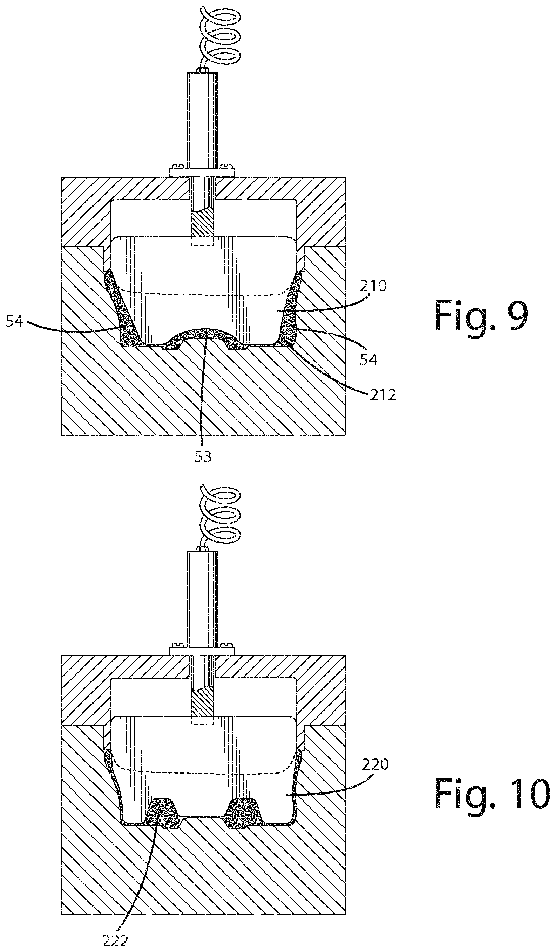

Another alternative blade 210 is shown in the loading position in Fig. 9. In this embodiment, the bottom and side edges of the blade 210 are shaped to provide a significant space S3 between the bottom center portion of the blade 210, as well as along the sides S4 of the blade 210. In this embodiment, significant intermingling overlapping between the different bead foams will occur toward the bottom center of the sole component 212, as well as along the lateral and medial sides of the blade 210. The blade 210 may remain in this position throughout the joining step, or the blade 202 may be partially or fully retracted after loading and before joining of the foam beads.

Fig. 10 shows another alternative embodiment of the blade 220. In this embodiment, the blade 220 is configured to provide two areas of intermingling or overlapping along the bottom of the sole component 222. As with other embodiments, the blade 220 may remain in this position throughout the joining step, or the blade 220 may be partially or fully retracted after loading and before joining of the foam beads.

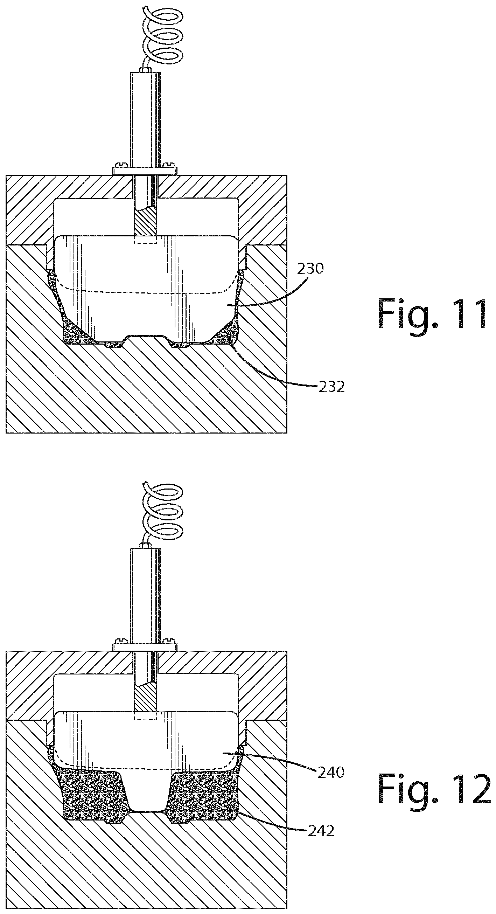

Fig. 11 shows an alternative blade 230 in which the bottom corners of the blade 230 are truncated or otherwise shortened to provide intermingling or overlapping along the outer medial and outer lateral portions of the sole component 232.

Fig. 12 illustrates another alternative embodiment in which the bottom of the blade 240 is shaped to provide enlarged intermingling or overlapping areas on both the medial and lateral sides of the sole component 242.

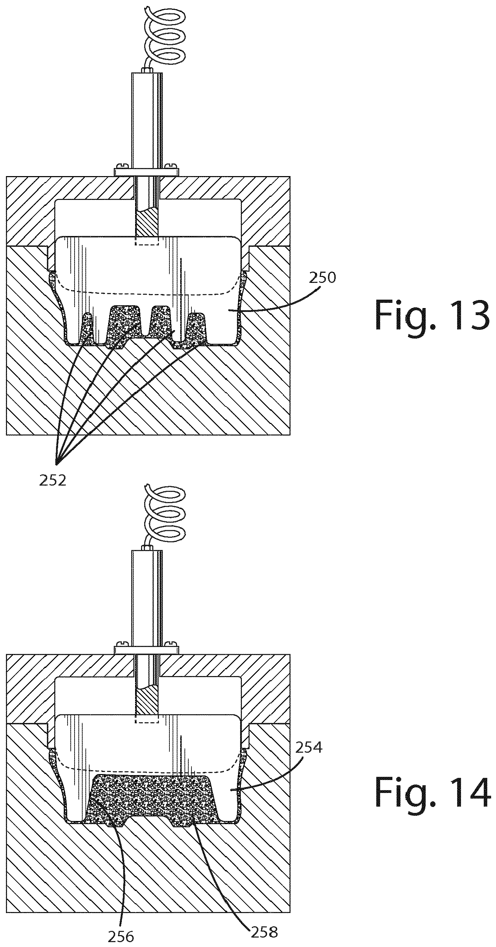

Another alternative blade 250 is shown in Fig. 13. In this embodiment, the bottom of the blade 250 defines a series of notches 252 that define four areas in which the foam beads can intermingle or overlap during loading. The number, locations, size and shape of notches may vary from application to application, as desired.

Fig. 14 is a further alternative embodiment in which the bottom edge of the blade 254 includes a large central notch 256 that provides the sole component 258 with a large central region in which the different foam beads can intermingle or overlap.

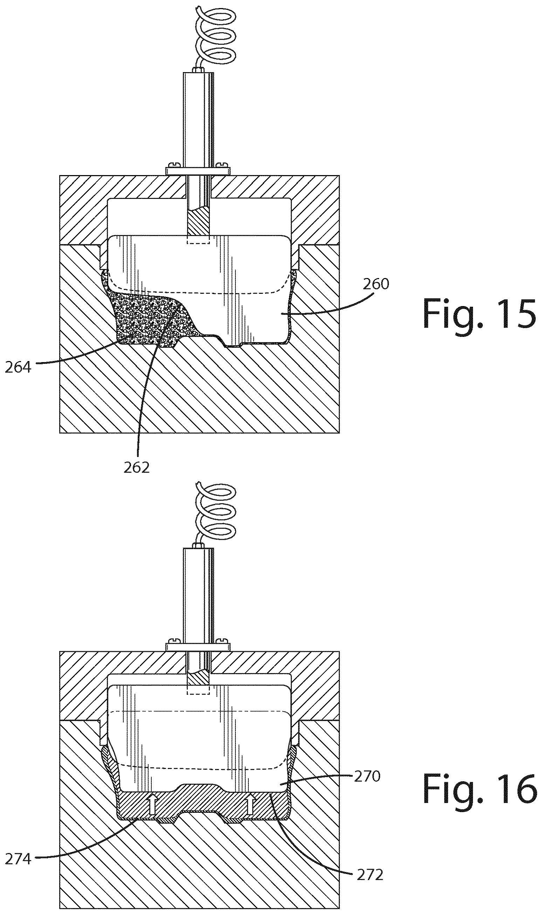

An embodiment configured to provide intermingling or overlapping of the foam beads along only one side of the sole component 262 is shown in Fig. 15. As can be seen, the blade 260 of this embodiment includes a relatively large notch situated on one side of the blade 260 to provide a gradual transition along one side of the sole component 264. The notch may be disposed on the opposite side of the blade 260, if desired.

Fig. 16 shows a blade 270 having a bottom edge 272 that mirrors the shape of the bottom of the sole component 274. The blade 270 may be raised or lowered (as represented by arrows M in Fig. 16) to provide the desired amount of spacing between the bottom edge of the blade 270 and the bottom of the mold cavity 276. This embodiment can be used to form sole components with different ratios of separated foam beads to intermingled/overlapped foam beads. For example, in use, the position of the blade 270 may vary when molding different sole components. Additionally, Fig. 16 illustrates the potential to use the blade 270 to limit intermingling or overlapping during the loading step, while still allowing contact of foam beads thereafter. For example, the blade 270 may be positioned at essentially any depth during loading to provide defined separation between the different foam beads of adjacent regions down to the depth of the blade 270. After loading, the blade 270 may be partially or fully retracted to allow the previously separated beads to come into direct contact through the area no longer occupied by the retracted blade 270, which will allow the foam beads in this region to join along an abrupt transition. Consequently, the foam beads from adjacent regions are able to join throughout the regions left open during loading and caused to be open by retraction of the blade 270.

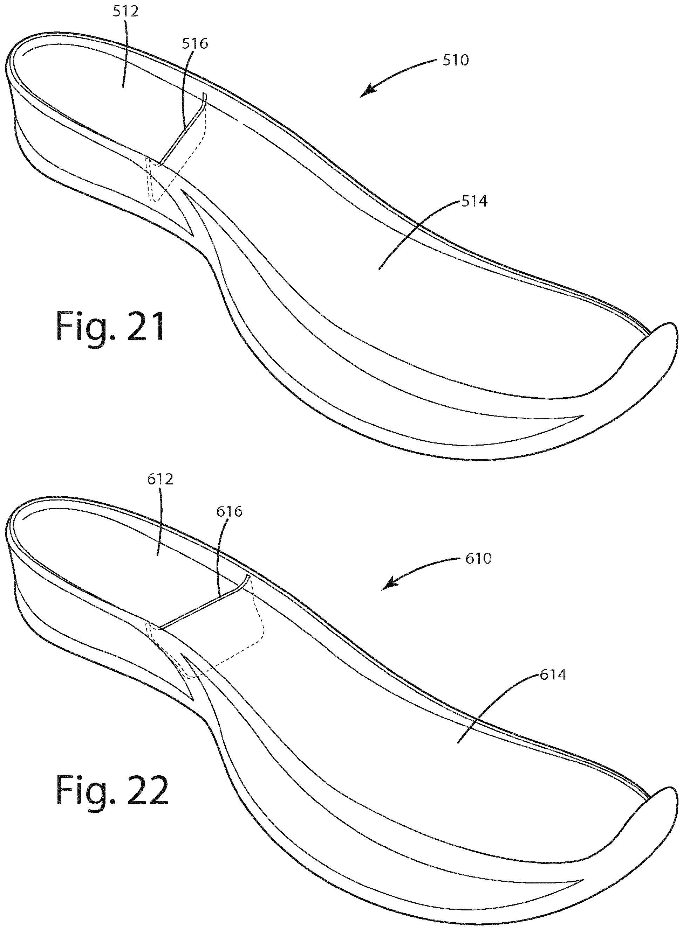

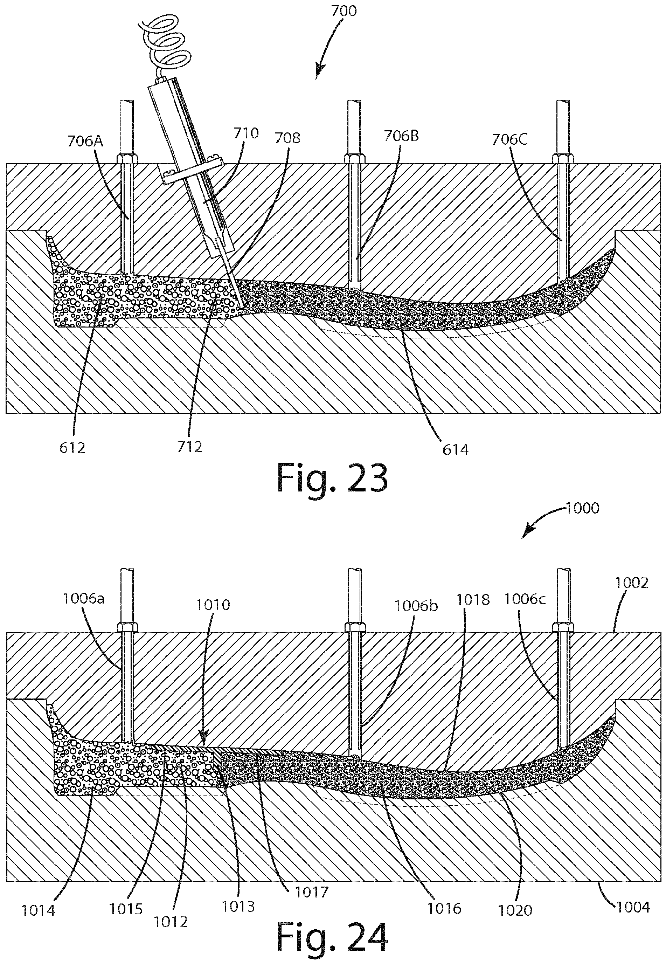

The present invention helps to provide a gradual transition between the foam beads of one region and the foam beads of the adjacent region. In some applications, the gradual transition may result from mixing and intermingling of the different foam beads in the interface area between adjacent regions. For example, Figs. 5 and 6 show an intermingled region having a width OL1 and a height of H1 through which the foam beads of adjacent region mix and intermingle as the mold cavity is loaded. This region can be compared against the contact region resulting from retraction of the blade 108, which has a width of OL3 (Fig. 6). In other applications, the gradual transition may result from tapered layering of the foam beads. For example, as shown in Fig. 20, the timing and rate at which the different mold regions are loaded can be used to implement a gradual transition. More specifically, the foam beads may be introduced into adjacent regions so that the foam beads of one region flow past the blade 108 into the adjacent region in controlled manner. The presence of the blade 108 will assist in causing the foam beads to enter into the adjacent region in a tapered flow. Fig. 20 shows the foam beads of the heel region extending into the forefoot region as a tapered head 109 having a generally tapered profile that decreases away from the blade 108. The characteristics of the tapered head 109 may be controlled by adjusting the related parameters, such as varying the depth of the blade, varying the characteristics of the foam beads, varying the timing at which the different foam beads are loaded into the mold cavity, adjusting the rate at which the foam beads are introduced into the mold cavity and varying the pressure at which the foam beads are loaded. Further, the characteristics of the tapered head 109 may be controlled using an angled blade, such as the angled blade shown in Figs. 22 and 23. In Figs. 22 and 23, the blade is angled with respect to the direction of normal loading (e.g. in this case, a generally vertical axis) so that the different foam beads on opposite sides of the blade vertically overlap to differing degrees to provide tapered layering. In use, the depth of the blade 108 may be set to define the maximum height of the tapering layer of foam beads, and the loading parameters may be set to control the characteristics of the tapered head 109 and consequently the characteristics of gradual transition between the different foam beads. In the illustrated embodiment, the tapered head 109 is configured to extend into the forefoot region following generally along line F1. However, the loading parameters may be adjusted to vary the configuration of the tapered head 109, as desired. For example, introducing the foam beads into the heel region more rapidly may cause the tapered head 109 to extend farther into the forefoot region to extend along line F2 or F3. Alternatively, the foam beads may be introduced into the heel region more slowly to shorten the tapered head 109 to follow along line F4. As can be seen, variations in the size and shape of the tapered head 109 can be used to vary the width of the transition portion (e.g. the portion of the sole component in which the two different types of foam beads overlap one another). It should also be noted that the foam beads may be loaded so that the tapered head extends beyond the blade 108 in either direction. For example, the tapered head 109 may be configured to extend from the forefoot region into the heel region as represented by lines R1 through R4 by introducing the foam beads of the forefoot region more rapidly or earlier than the foam beads of the heel region.

In the various embodiments described above, the blade is part of the molding system and is removed from the sole component during or after the manufacturing process. In these embodiments, the blade may be manufactured from steel or other materials capable of withstanding the molding conditions. In alternative embodiments, the blade may be configured to become part of the finished molded component. For example, the blade may be manufactured from a material that bonds with the foam beads during the joining step. To illustrate, when the molded component is manufactured from eTPU foam beads, the blade may be manufactured from TPU or foamed TPU. The blade need not, however, be manufactured from a material that chemically bonds to the foam beads. In some embodiment, the blade may include holes or other shape features to provide a mechanical interlock between the foam beads and the blade. In embodiments of this type, the blade may be temporarily affixed to a mold part or to the blade actuator, for example, by vacuum, mold pins or other suitable mechanisms. After the sole component is formed, the blade may be separated from the mold part or the blade actuator to remain an integral part of the sole component. Additionally, the blade may be configured to provide additional functional or aesthetic features. For example, the bottom of blade may have a more complex shape with a bottom flange that extends generally longitudinally to provide the midsole with an embedded shank-like structure or a top flange that extends generally longitudinally to form an exposed shank-like structure or an exposed toe cup or heel cup on the top of the midsole.

Fig. 24 shows an alternative molding system 1000 configured to form a midsole with an integral blade/shank 1010. In this embodiment, the molding system 1000 includes a top mold part 1002, a bottom mold part 1004 and a plurality of injection ports 1006a-c. The mold parts 1002 and 1004 cooperatively define a mold cavity 1012. The blade/shank 1010 generally include a blade segment 1013 extending downwardly from a shank segment formed from rear shank segment 1015 and forward shank segment 1017. The blade/shank 1010 of this embodiment is a one-piece component that is manufactured separately and placed into the mold cavity 1012 prior to formation of the midsole. For example, the blade/shank 1010 may be temporarily fixed in place within the mold cavity 1012 by vacuum, pins or essentially any other suitable mechanism. The illustrated blade/shank 1010 is mere exemplary, and the size, shape and configuration of the blade/shank and its various segments 1013, 1015 and 1017 may vary from application to application. In the illustrated embodiment, when installed in the mold cavity, the shank segments 1015 and 1017 are situated at and follow along a portion of top surface 1018, and the blade segment 1013 extends downwardly only part way to the bottom surface 1020 leaving gap that provides communication between the heel region 1014 and the forefoot region 1016. In use, the blade segment 1013 helps to provide the desired transition region between the material of the heel region and the material of the forefoot region, while shank segments 1015 and 1017 help to provide support for the wearer's foot. The blade/shank 1010 may be manufactured from a wide range of materials. Although not necessary, the blade/shank 1010 may be manufacture from a material selected to chemically bond with the foam beads of the midsole. For example, when the midsole is manufactured from eTPU foam beads, the blade/shank may be manufactured from TPU or foamed TPU. The material properties of the blade/shank 1010 may vary from application to application to provide the desired level of support. In applications where additional stiffness is desired, the blade/shank 1010 may be manufactured from a filled polymer, such as glass-filled TPU.

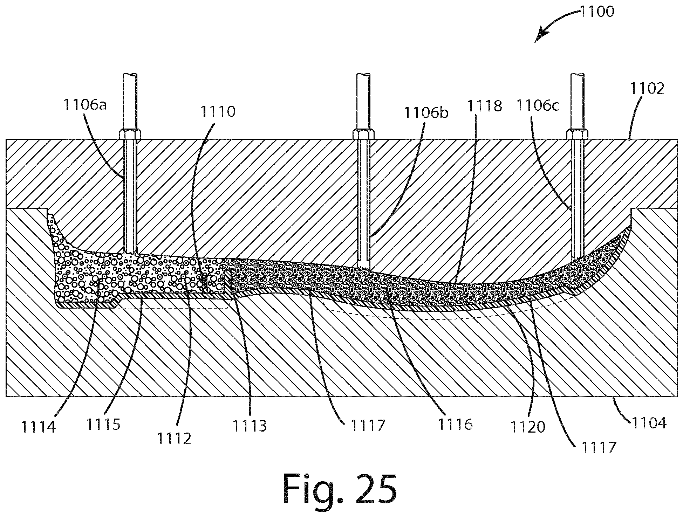

Fig. 25 shows another alternative molding system 1100 configured to co-mold a midsole and an outsole where the outsole 1110 includes an integral blade 1113. In this embodiment, the molding system 1100 includes a top mold part 1102, a bottom mold part 1104 and a plurality of injection ports 1106a-c. The mold parts 1102 and 1104 cooperatively define a mold cavity 1112. The outsole/blade 1110 of this embodiment is a one-piece component that is manufactured separately and placed into the mold cavity 1112 prior to formation of the midsole. The outsole/blade 1110 may be manufactured from a material selected to chemically bond with the foam beads, but that is not strictly necessary. For example, the outsole/blade 1110 may be injection molded from TPU or other suitable outsole materials. The outsole/blade 1110 may be fixed in place within the mold cavity 1012 by adhesive, pins or essentially any other suitable mechanism. As shown, the outsole/blade 1110 includes an upwardly-extending blade segment 1113 that, when placed in the mold, extends laterally across the mold cavity. In the illustrated embodiment, the blade segment 1113 extends upwardly only partially to the top surface 1118 leaving gap that provides communication between the heel region 1114 and the forefoot region 1116. The size of the gap may vary from application to application. In use, the blade segment 1113 helps to provide the desired transition region between the materials of the heel region 1114 and the forefoot region 1116. Although not shown, the bottom surface of the outsole 1110 may be formed with any desired lug or trade pattern. The size, shape and configuration of the various segments 1113, 1115 and 1117 may vary from application to application.

In some applications, the blade may be used to support supplemental sole parts that are insert molding into the sole component. For example, a shank may be temporarily affixed to the blade (e.g. the bottom of the blade) to hold and support the shank in the desired position while the foam beads are loaded into the mold cavity and joined to one another. After the joining step, the blade may be retracted leaving the shank or other supplement sole part embedded within the sole component. The shank may be attached to the blade by a friction fit (e.g. a channel that tightly fits over the bottom edge of the blade) or other mechanical construction that can both hold the shank during molding and separate from the shank when the blade is retracted.

As noted above, the blade may enter the mold cavity from essentially any direction and may extend at essentially any angle (simple or compound) to essentially any depth. To illustrate, Fig. 21 shows a midsole 510 that was manufactured using a blade extending at an angle to an axis extending laterally across the midsole. As can be seen in Fig. 21, the gap 516 does not extend perpendicular to the heel-to-toe direction, but instead is angled with its lateral end positioned forward (e.g. more toward the toe) of its medial end. As a result, the interface between the heel portion 512 and the forefoot portion 514 follows a corresponding angle. As another illustration, Fig. 22 shows an alternative midsole 610 that was manufactured using a blade extending at an angle to an axis extending vertically through the midsole. As a result, the heel portion 612 and forefoot portion 614 vertically overlap through the transition region. Fig. 23 shows a molding system 700 in which the blade 708 and blade actuator 710 extend at an angle to a vertical axis extending through the midsole mold cavity. It should be understood that the examples shown in Figs. 21-23 are intended for illustration purposes and not intended to imply any limitations on the position or orientation of the blade.

The above description is that of current embodiments of the invention. Various alterations and changes can be made without departing from the spirit and broader aspects of the invention as defined in the appended claims, which are to be interpreted in accordance with the principles of patent law including the doctrine of equivalents. This disclosure is presented for illustrative purposes and should not be interpreted as an exhaustive description of all embodiments of the invention or to limit the scope of the claims to the specific elements illustrated or described in connection with these embodiments. For example, and without limitation, any individual element(s) of the described invention may be replaced by alternative elements that provide substantially similar functionality or otherwise provide adequate operation. This includes, for example, presently known alternative elements, such as those that might be currently known to one skilled in the art, and alternative elements that may be developed in the future, such as those that one skilled in the art might, upon development, recognize as an alternative. Further, the disclosed embodiments include a plurality of features that are described in concert and that might cooperatively provide a collection of benefits. The present invention is not limited to only those embodiments that include all of these features or that provide all of the stated benefits, except to the extent otherwise expressly set forth in the issued claims. Any reference to claim elements in the singular, for example, using the articles "a," "an," "the" or "said," is not to be construed as limiting the element to the singular.

The following statements are useful for understanding embodiments of the present invention.
S1. A molding system for manufacturing a sole component from foam beads, comprising:
   at least two mold parts that cooperatively define a mold cavity;
   a first blade disposed within the mold cavity, the blade position to divide the mold cavity into a first mold region and a second mold region, the blade extending into and only partially across the mold cavity, the blade and the mold cavity defining a space through which the first mold region and the second mold region are in communication, whereby the first mold region and the second mold region are separated by the blade through a first portion of the mold cavity and in communication via the space through a second portion of the mold cavity;
   a first inlet defined in at least one of the mold parts, the first inlet being in communication with the first region to allow bead foam to be introduced into the first region; and
   a second inlet defined in at least one of the mold parts, the second inlet being in communication with the second region to allow bead foam to be introduced into the second region.
S2. The molding system of statement S1 wherein the blade is movable from a loading position to a joining position.
S3. The molding system of statement S2 further including a blade actuator for moving the blade between the loading position and the joining position.
S4. The molding system of statement S2 further including a blade actuator that is retractable to move the blade from the loading position to the joining position.
S5. The molding system of statement S1 wherein the molding system includes a second blade disposed within the mold cavity, wherein the first blade and the second blade divide the mold cavity into the first region, the second region and a third region.
S6. The molding system of statement S1 further including a blade actuator that is retractable to move the blade from the loading position to the joining position, the blade being fully retracted from the mold cavity when in the joining position.
S7. The molding system of statement S1 wherein the blade is formed from a material capable of joining with the bead foam during a process of joining the bead foam, the blade being separable from the molding system to remain part of the sole component.
S8. A sole component for an article of footwear comprising:
   a first molded portion manufactured from a first type of bead foam; and
   a second molded portion manufactured from a second type of bead foam, the sole component having a first region through which the first type of bead foam and the second type of bead foam are not substantially intermingled and do not substantially overlap and a second region through which the first type of bead foam and the second type of bead foam substantially intermingle or substantially overlap, whereby there is a more gradual transition from the first type to the second type through the second region.
S9. The sole component of statement S8 wherein the sole component has a top surface and a thickness, the top surface defining a gap between the first molded portion and the second molded portion, the gap extending only partially through the thickness of the sole component.
S10. The sole component of statement S9 wherein the gap coincides with the first region.
S11. The sole component of statement S8 wherein the first molded portion is a heel portion and the second molded portion is a forefoot portion.
S12. The sole component of statement S11 wherein the first type of bead foam has a greater density than the second type of bead foam, whereby the heel portion is substantially firmer than the forefoot portion.
S13. The sole component of statement S12 wherein the gap is filled with an adhesive to join the heel portion and the forefoot portion through the first region.
S14. The sole component of statement S8 wherein the first molded portion is joined to the second molded portion through the first region and the second region.
S15. The sole component of statement S11 wherein the first type of bead foam has a greater density than the second type of bead foam.
S16. A method for manufacturing a sole component for an article of footwear, comprising the steps of:
   providing a mold cavity;
   positioning a first blade within a mold cavity, the first blade partially separating the mold cavity into a first region and a second region, the first blade and the mold cavity defining a space providing communication between the first region and the second region;
   loading the mold cavity by introducing a first type of foam beads into the first region and introducing a second type of foam beads into the second region;
   maintaining by the first blade partial separation between the first region and the second region as the foam beads are introduced into the first region and the second region during the loading step;
   permitting through the space substantial intermingling or overlapping of the first type of foam beads and the second type of foam beads during the loading step; and
   joining the foam beads together in the mold cavity to form the sole component with a first portion formed substantially from the first type of foam beads and a second portion formed substantially from the second type of foam beads, wherein the interface between the first portion and the second portion includes a first portion with an abrupt transition and a second portion with a gradual transition.
S17. The method of statement S16 wherein the sole component includes an heel region and a forefoot region; and
wherein step of positioning the blade is further defined as positioning the blade between the heel region and the forefoot region.
S18. The method of statement S17 further including the step of retracting the blade after the loading step and before the joining step.
S 19. The method of statement S18 wherein a least one of the first type of foam bead is an expanded thermoplastic polyurethane.
S20. The method of statement S18 wherein the first type of foam bead is an expanded thermoplastic polyurethane having a first density and the second type of foam bead is an expanded thermoplastic polyurethane having a second density substantially lower than the first density. S21. The method of statement S20 wherein the method further includes the step of positioning a second blade within the mold cavity, the first blade and the second blade partially separating the mold cavity into the first region, the second region and a third region, the second blade and the mold cavity defining a space providing communication between the third region and at least one of the first region and the second region.
S22. The method of statement S16 wherein the loading step includes introducing a first expanded thermoplastic polyurethane having a first density into the first region and introducing a second expanded thermoplastic polyurethane having a second density into the second region;
further including the step of at least partially retracting the first blade after the loading step and before the joining step, retraction of the first blade causing the first type of foam beads and the second type of foam beads to come into contact along an interface separated by the blade before the retracting step; and
wherein the joining step includes joining the first type of foam beads and the second type of foam beads along the interface.
S23. The method of statement S18 wherein the first type of foam bead is of a first color and the second type of foam bead is of a second color different from the first color.

## Claims

1. A molding system for manufacturing a sole component from foam beads, comprising:
at least two mold parts that cooperatively define a mold cavity;
a first blade disposed within the mold cavity, the blade position to divide the mold cavity into a first mold region and a second mold region, the blade extending into and only partially across the mold cavity, the blade and the mold cavity defining a space through which the first mold region and the second mold region are in communication, whereby the first mold region and the second mold region are separated by the blade through a first portion of the mold cavity and in communication via the space through a second portion of the mold cavity;
a first inlet defined in at least one of the mold parts, the first inlet being in communication with the first region to allow bead foam to be introduced into the first region; and
a second inlet defined in at least one of the mold parts, the second inlet being in communication with the second region to allow bead foam to be introduced into the second region.

2. The molding system of claim 1 wherein the blade is movable from a loading position to a joining position.

3. The molding system of claim 2 further including:
a blade actuator for moving the blade between the loading position and the joining position; or
a blade actuator that is retractable to move the blade from the loading position to the joining position, optionally wherein the blade is fully retracted from the mold cavity when in the joining position.

4. The molding system of any of the preceding claims wherein the molding system includes a second blade disposed within the mold cavity, wherein the first blade and the second blade divide the mold cavity into the first region, the second region and a third region.

5. The molding system of any of the preceding claims wherein the or each blade, as the case may be, is formed from a material capable of joining with the bead foam during a process of joining the bead foam, the blade being separable from the molding system to remain part of the sole component.

6. A sole component for an article of footwear comprising:
a first molded portion manufactured from a first type of bead foam; and
a second molded portion manufactured from a second type of bead foam, the sole component having a first region through which the first type of bead foam and the second type of bead foam are not substantially intermingled and do not substantially overlap and a second region through which the first type of bead foam and the second type of bead foam substantially intermingle or substantially overlap, whereby there is a more gradual transition from the first type to the second type through the second region.

7. The sole component of claim 6 wherein the sole component has a top surface and a thickness, the top surface defining a gap between the first molded portion and the second molded portion, the gap extending only partially through the thickness of the sole component,
optionally wherein the gap coincides with the first region.

8. The sole component of claim 6 or claim 7 wherein the first molded portion is a heel portion and the second molded portion is a forefoot portion.

9. The sole component of claim 8 wherein the first type of bead foam has a greater density than the second type of bead foam,
optionally whereby the heel portion is substantially firmer than the forefoot portion.

10. The sole component of any of claims 7 to 9 wherein the gap is filled with an adhesive to join the heel portion and the forefoot portion through the first region.

11. The sole component of any of claims 6 to 10 wherein the first molded portion is joined to the second molded portion through the first region and the second region.

12. A method for manufacturing a sole component for an article of footwear, comprising the steps of:
providing a mold cavity;
positioning a first blade within a mold cavity, the first blade partially separating the mold cavity into a first region and a second region, the first blade and the mold cavity defining a space providing communication between the first region and the second region;
loading the mold cavity by introducing a first type of foam beads into the first region and introducing a second type of foam beads into the second region;
maintaining by the first blade partial separation between the first region and the second region as the foam beads are introduced into the first region and the second region during the loading step;
permitting through the space substantial intermingling or overlapping of the first type of foam beads and the second type of foam beads during the loading step; and
joining the foam beads together in the mold cavity to form the sole component with a first portion formed substantially from the first type of foam beads and a second portion formed substantially from the second type of foam beads, wherein the interface between the first portion and the second portion includes a first portion with an abrupt transition and a second portion with a gradual transition.

13. The method of claim 12 wherein:
the sole component includes an heel region and a forefoot region and the step of positioning the blade is further defined as positioning the blade between the heel region and the forefoot region; and/or
the method further includes the step of retracting the blade after the loading step and before the joining step; and/or
a least one of the first type of foam bead is an expanded thermoplastic polyurethane; and/or
the first type of foam bead is an expanded thermoplastic polyurethane having a first density and the second type of foam bead is an expanded thermoplastic polyurethane having a second density substantially lower than the first density; and/or
the first type of foam bead is of a first color and the second type of foam bead is of a second color different from the first color.

14. The method of claim 12 or claim 13 wherein the method further includes the step of positioning a second blade within the mold cavity, the first blade and the second blade partially separating the mold cavity into the first region, the second region and a third region, the second blade and the mold cavity defining a space providing communication between the third region and at least one of the first region and the second region.

15. The method of any of claims 12 to 14 wherein the loading step includes introducing a first expanded thermoplastic polyurethane having a first density into the first region and introducing a second expanded thermoplastic polyurethane having a second density into the second region;
further including the step of at least partially retracting the first blade after the loading step and before the joining step, retraction of the first blade causing the first type of foam beads and the second type of foam beads to come into contact along an interface separated by the blade before the retracting step; and
wherein the joining step includes joining the first type of foam beads and the second type of foam beads along the interface.
